# EUROPÄISCHE PATENTANMELDUNG

(11) **EP 2 000 305 A2**
(43) Veröffentlichungstag der Anmeldung: **10.12.2008**
(21) Anmeldenummer: 08009168.9
(22) Anmeldetag: 17.05.2008
(51) Int. Cl.: B41F 33/00, G06F 21/00

(54) **Druckmaschinensteuerungssystem**

(30) Priorität: 08.06.2007 DE 202007008060 U
(71) Anmelder: manroland AG, 63075 Offenbach (DE)
(72) Erfinder: Duschl, Dieter, Dr., 63075 Offenbach/Main (DE); Hess, Michael, Dipl.-Ing., 55252 Mainz-Kastel (DE); Ruppertz, Michael, Dipl.-Ing., 60327 Frankfurt (DE); Schlitz, Thomas, 63165 Mühlheim (DE); Wohlgemuth, Gerhard, Dipl.-Mathm., 63322 Rödermark (DE)
(74) Vertreter: Stahl, Dietmar

(57) **Zusammenfassung**

Die Erfindung betrifft ein Druckmaschinensteuerungssystem, insbesondere einer Bogendruckmaschine, mit einem Druckmaschinenleitstand (11). Erfindungsgemäß weist der Druckmaschinenleitstand (11) eine Schnittstelle (12) auf, an die eine von mehreren Identifizierungseinrichtungen (13, 14, 15, 16, 17) potentieller Bediener anschließbar ist, wobei der Druckmaschinenleitstand (11) dann, wenn eine Identifizierungseinrichtung (17) eines tatsächlichen Bedieners an die Schnittstelle (12) des Druckmaschinenleitstands (11) angeschlossen ist, zumindest eine Datei aus der an die Schnittstelle (12) angeschlossenen Identifizierungseinrichtung (17) ausliest und abhängig von der oder jeder ausgelesen Datei den Zugriff auf Funktionen des Druckmaschinenleitstands (11) freigibt oder sperrt.

## Beschreibung

Die Erfindung betrifft ein Druckmaschinensteuerungssystem nach dem Oberbegriff des Anspruchs 1.

Ein Druckmaschinensteuerungssystem z. B. einer Bogendruckmaschine verfügt über einen Druckmaschinenleitstand, wobei am Druckmaschinenleitstand von einem Bediener wie einem Drucker Eingaben vorgenommen werden können, die insbesondere Auswirkungen auf den Druckprozess haben. Um einen Druckmaschinenleitstand und damit letztendlich das Druckmaschinensteuerungssystem vor einem unbefugten Zugriff zu schützen, sind Einrichtungen erforderlich, mit Hilfe derer eine Benutzeridentifikation und ein Zugriffsschutz an einem Druckmaschinenleitstand realisiert werden können. Bislang sind aus dem Stand der Technik keine Lösungen bekannt, die an einem Druckmaschinenleitstand eines Druckmaschinensteuerungssystems eine einfache sowie effiziente Benutzeridentifikation und damit einen einfachen sowie effizienten Zugriffsschutz ermöglichen.

Hiervon ausgehend liegt der vorliegenden Erfindung das Problem zugrunde, ein neuartiges Druckmaschinensteuerungssystem zu schaffen.

Dieses Problem wird durch ein Druckmaschinensteuerungssystem gemäß Anspruch 1 gelöst.

Erfindungsgemäß weist der Druckmaschinenleitstand eine Schnittstelle auf, an die eine von mehreren Identifizierungseinrichtungen potentieller Bediener anschließbar ist, wobei der Druckmaschinenleitstand dann, wenn eine Identifizierungseinrichtung eines tatsächlichen Bedieners an die Schnittstelle des Druckmaschinenleitstands angeschlossen ist, zumindest eine Datei aus der an die Schnittstelle angeschlossenen Identifizierungseinrichtung ausliest und abhängig von der oder jeder ausgelesenen Datei den Zugriff auf Funktionen des Druckmaschinenleitstands freigibt oder sperrt.

Der Druckmaschinenleitstand des erfindungsgemäßen Druckmaschinensteuerungssystems umfasst eine Schnittstelle, wobei an die Schnittstelle des Druckmaschinenleitstands eine von mehreren Identifizierungseinrichtungen potentieller Bediener anschließbar ist. Der Druckmaschinenleitstand liest zumindest eine Datei aus einer an seine Schnittstelle angeschlossenen Identifizierungseinrichtung eines tatsächlichen Bedieners aus und gibt abhängig von der oder jeder ausgelesenen Datei den Zugriff auf Funktionen des Druckmaschinenleitstands frei oder sperrt dieselben. Hierdurch kann eine einfache und effiziente Benutzeridentifikation und damit ein einfacher und effizienter Zugriffsschutz auf einen Druckmaschinenleitstand und damit ein Druckmaschinensteuerungssystem realisiert werden.

Vorzugsweise ist die Schnittstelle als USB-Schnittstelle ausgebildet, wobei die jede Identifizierungseinrichtung als USB-Keystick ausgebildet ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der einzigen Zeichnung näher erläutert.

Dabei zeigt:

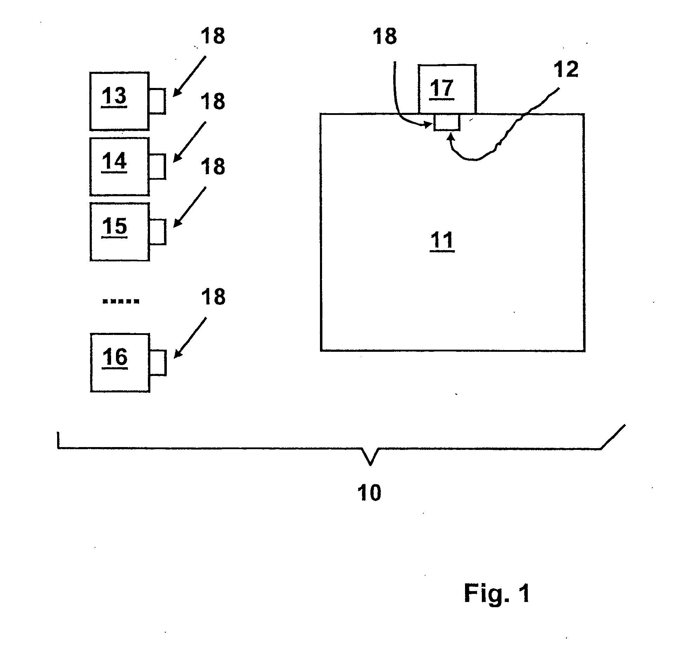

- Fig. 1:: ein Blockschaltbild eines erfindungsgemäßen Druckmaschinensteuerungssystems.

In Fig. 1 ist ein Blockschaltbild eines erfindungsgemäßen Druckmaschinensteuerungssystems 10 gezeigt, wobei das Druckmaschinensteuerungssystem 10 einen Druckmaschinenleitstand 11 umfasst. Der Druckmaschinenleitstand 11 umfasst eine Schnittstelle 12, wobei an die Schnittstelle 12 eine von mehreren Identifizierungseinrichtungen 13, 14, 15, 16 bzw. 17 potentieller Bediener bzw. Benutzer über eine entsprechende Schnittstelle 18 derselben angeschlossen werden kann.

Gemäß Fig. 1 ist die Identifizierungseinrichtung 17 über ihre Schnittstelle 18 an die Schnittstelle 12 des Druckmaschinenleitstands 11 angeschlossen. Die Schnittstelle 12 des Druckmaschinenleitstands 11 ist als USB-Schnittstelle ausgebildet. Jede Identifizierungseinrichtung 13, 14, 15, 16 und 17 ist als USB-Keystick ausgeführt.

Der Druckmaschinenleitstand 11 liest aus der an die Schnittstelle 12 desselben angeschlossenen Identifizierungseinrichtung 17 zumindest eine Datei aus und gibt abhängig von der oder jeder ausgelesenen Datei den Zugriff auf Funktionen des Druckmaschinenleitstands 11 frei oder sperrt dieselben. Bei den freigegebenen bzw. gesperrten Funktionen des Druckmaschinenleitstands 11 handelt es sich um bedienerabhängige bzw. benutzerabhängige Funktionen, um unterschiedlichen Benutzern bzw. Bedienern unterschiedliche Zugriffsrechte bzw. Userlevel zuzuordnen. So kann z. B. vorgesehen sein, dass für alle Benutzer bzw. Bediener identische Grundzugriffsrechte zugeordnet sind, die z. B. die Veränderung von Grundeinstellungen des Druckmaschinenleitstands 11 betreffen, um die Bedienung des Druckmaschinenleitstands 11 z. B. durch Veränderung der sogenannten Pulthöhe für alle Bediener ergonomisch zu gestalten. Servicepersonal können gegenüber Druckern spezielle Sonderzugriffsrechte zugewiesen werden, um Servicetools des Druckmaschinensteuerungssystems 10 zu starten oder Software des Druckmaschinensteuerungssystems 10 auszutauschen. Einem Saalmeister können weitere Sonderzugriffsrechte zugeordnet sein, um z. B. besondere Anwendungen der Druckmaschine freizugeben oder zu sperren.

Wie bereits ausgeführt, ist jede Identifizierungseinrichtung 13, 14, 15, 16, 17 vorzugsweise als USB-Keystick ausgeführt. Ein solcher USB-Keystick enthält einen eineindeutigen Identifizierungscode, der auslesbar ist. Zusätzlich zu dem eineindeutigen Identifizierungscode ist in jeder Identifizierungseinrichtung 13 bis 17 des erfindungsgemäßen Druckmaschinensteuerungssystems 10 weiterhin eine verschlüsselte Rechtedatei gespeichert, die neben dem Identifizierungscode der jeweiligen Identifizierungseinrichtung 13, 14, 15, 16, 17 auch bedienerabhängige bzw. benutzerabhängige Zugriffsrechte enthält.

Dann, wenn eine derartige Identifizierungseinrichtung 17 an die Schnittstelle 12 des Druckmaschinenleitstands 11 angeschlossen ist, liest der Druckmaschinenleitstand 11 den eineindeutigen Identifizierungscode sowie die verschlüsselte Rechtedatei aus der Identifizierungseinrichtung aus und gibt prinzipiell nur dann den Zugriff auf den Druckmaschinenleitstand frei 11, wenn der ausgelesene, eineindeutige Identifizierungscode der Identifizierungseinrichtung 17 mit dem Identifizierungscode der verschlüsselten Rechtedatei übereinstimmt. So kann vermieden werden, dass durch Kopieren einer Rechtedatei auf eine Identifizierungseinrichtung mit einem anderen Identifizierungscode unzulässige bzw. nicht-autorisierte Identifizierungseinrichtungen zur Bedienung des Druckmaschinensteuerungssystems 10 verwendet werden.

Dann, wenn der Druckmaschinenleitstand 11 feststellt, dass der ausgelesene, eineindeutige Identifizierungscode der an seine Schnittstelle 12 angeschlossenen Identifizierungseinrichtung 17 mit dem Identifizierungscode der in derselben gespeicherten Rechtedatei übereinstimmt, so überprüft der Druckmaschinenleitstand 11, ob die Zugriffsrechte der Rechtedatei gültig sind.

Die Gültigkeit von Zugriffsrechten kann z. B. mit Überschreiten eines bestimmten Datums verfallen. Die Gültigkeitsüberprüfung kann z. B. derart erfolgen, dass der Druckmaschinenleitstand 11 Zugriffsrechte einer ausgelesenen Rechtedatei mit einer Datenbank vergleicht. Nur dann, wenn Zugriffsrechte der Rechtedatei gültig sind, gibt der Druckmaschinenleitstand den Zugriff auf Funktionen desselben frei.

Dann, wenn der Druckmaschinenleitstand 11 feststellt, dass Zugriffsrechte der ausgelesenen Rechtedatei ungültig sind, können entweder die Zugriffsrechte nach Abgleich mit einer Datenbank temporär gültig geschaltet werden oder die Zugriffsrechte werden nach Abgleich mit der Datenbank ungültig belassen, um den Zugriff auf Funktionen des Druckmaschinenleitstands 11 zu sperren.

Vorzugsweise weist der Druckmaschinenleitstand in Bezug auf die ldentifizierungseinrichtung ausschließlich Leserechte auf. Es ist jedoch auch möglich, dass dann, wenn eine Identifizierungseinrichtung 17 an die Schnittstelle 12 des Leitstands 11 angeschlossen ist, der Leitstand 11 nach Abgleich der Zugriffsrechte, die in der aus der Identifizierungseinrichtung 17 ausgelesenen Rechtedatei enthalten sind, die Rechtedatei der Identifizierungseinrichtung 17 bzw. die Zugriffsrechte dadurch aktualisiert, dass die Rechtedatei nach Abgleich mit einer Datenbank erneuert bzw. überschrieben wird. Durch solche Schreibrechte des Druckmaschinenleitstands 11 ist es möglich, eine Identifizierungseinrichtung 17, nämlich dessen gespeicherte Rechtedatei, stets auf einem aktuell gültigen Status zu halten. Weist der Druckmaschinenleitstand 11 keine derartigen Schreibrechte in Bezug auf die ldentifizierungseinrichtung 17 auf, so erfolgt die Aktualisierung der Rechtedatei der Identifizierungseinrichtung 17 vorzugsweise an einer externen Rechnereinrichtung, z.B. an einem Laptop. Hierdurch ist es möglich, Zugriffsrechte dynamisch stets auf dem aktuellsten Stand zu halten.

Wie bereits erwähnt, sind in jeder als USB-Keystick ausgebildeten ldentifizierungseinrichtung 13, 14, 15, 16, 17 sowohl ein eineindeutiger Identifizierungscode sowie eine verschlüsselte Rechtedatei gespeichert, die neben dem ldentifizierungscode auch Zugriffsrechte enthält. Der restliche Speicherbereich der als USB-Keystick ausgebildeten Identifizierungseinrichtungen 13, 14, 15, 16, 17 steht zur Speicherung weiterer Dateien zur Verfügung.

Alternativ ist es möglich, eine als USB-Keystick ausgebildete ldentifizierungseinrichtung 13, 14, 15, 16, 17 durch eine so genannte Low-Level-Formatierung für konventionelle Dateien unbrauchbar zu machen, so dass auf dem USB-Keystick in definierten Sektoren ausschließlich eine Rechtedatei gespeichert werden kann. Hierdurch wird ein Zugriff über konventionelle Software auf die im USB-Keystick gespeicherte Rechtedatei und damit ein Kopieren derselben unmöglich gemacht. In diesem Fall können auch solche USB-Keysticks als Identifizierungseinrichtung verwendet werden, die keinen eineindeutigen Identifizierungscode enthalten.

Das erfindungsgemäße Druckmaschinensteuerungssystem 10 erlaubt einen einfachen, effizienten und flexiblen Zugriffsschutz auf Funktionen des Druckmaschinenleitstands 11 und damit eines Druckmaschinensteuerungssystems 10. Identifizierungseinrichtungen 13, 14, 15, 16, 17, die an eine Schnittstelle 12 des Druckmaschinenleitstands 11 anschließbar sind, enthalten Rechtedateien mit benutzerabhängigen bzw. bedienerabhängigen Zugriffsrechten.

### Bezugszeichenliste

- 10: Druckmaschinensteuerungssystem
- 11: Druckmaschinenleitstand
- 12: Schnittstelle
- 13: Identifizierungseinrichtung
- 14: Identifizierungseinrichtung
- 15: Identifizierungseinrichtung
- 16: Identifizierungseinrichtung
- 17: Identifizierungseinrichtung
- 18: Schnittstelle

## Patentansprüche

1. Druckmaschinensteuerungssystem, insbesondere einer Bogendruckmaschine, mit einem Druckmaschinenleitstand,
**dadurch gekennzeichnet,**
**dass** der Druckmaschinenleitstand (11) eine Schnittstelle (12) aufweist, an die eine von mehreren Identifizierungseinrichtungen (13, 14, 15, 16, 17) potentieller Bediener anschließbar sind, wobei der Druckmaschinenleitstand (11) dann, wenn eine ldentifizierungseinrichtung (17) eines tatsächlichen Bedieners an die Schnittstelle (12) des Druckmaschinenleitstands (11) angeschlossen ist, zumindest eine Datei aus der an die Schnittstelle angeschlossenen Identifizierungseinrichtung (17) ausliest und abhängig von der oder jeder ausgelesenen Datei den Zugriff auf Funktionen des Druckmaischinenleitstands (11) freigibt oder sperrt.

2. Druckmaschinensteuerungssystem nach Anspruch 1,
**dadurch gekennzeichnet,**
**dass** die Schnittstelle (12) als USB-Schnittstelle ausgebildet ist, und dass jede Identifizierungseinrichtung als USB-Keystick ausgebildet ist.

3. Druckmaschinensteuerungssystem nach Anspruch 1 oder 2,
**dadurch gekennzeichnet,**
**dass** in jeder der Identifizierungseinrichtungen (13, 14, 15, 16, 17) zumindest ein für die jeweilige ldentifizierungseinrichtung (13, 14, 15, 16, 17) eineindeutiger Identifizierungscode sowie eine den Identifizierungscode und Zugriffsrechte enthaltene, verschlüsselte Rechtedatei gespeichert ist.

4. Druckmaschinensteuerungssystem nach Anspruch 3,
**dadurch gekennzeichnet,**
**dass** dann, wenn eine Identifizierungseinrichtung (17) an die Schnittstelle (12) angeschlossen ist, der Druckmaschinenleitstand (11) den eineindeutigen Identifizierungscode sowie die Rechtedatei ausliest und nur dann den Zugriff auf den Druckmaschinenleitstand (11) freigibt, wenn der eineindeutige ldentifizierungscode mit dem Identifizierungscode der Rechtedatei übereinstimmt.

5. Druckmaschinensteuerungssystem nach Anspruch 4,
**dadurch gekennzeichnet,**
**dass** dann, wenn der eineindeutige Identifizierungscode mit dem Identifizierungscode der Rechtedatei übereinstimmt, der Druckmaschinenleitstand (11) die Zugriffsrechte der Rechtedatei auf Gültigkeit überprüft und nur dann den Zugriff auf den Druckmaschinenleitstand (11) freigibt, wenn die Zugriffsrechte der Rechtedatei gültig sind.

6. Druckmaschinensteuerungssystem nach Anspruch 5,
**dadurch gekennzeichnet,**
**dass** der Druckmaschinenleitstand (11) dann, wenn die Zugriffsrechte der Rechtedatei ungültig sind, entweder die Zugriffsrechte nach Abgleich mit einer Datenbank temporär gültig schaltet und den Zugriff auf den Druckmaschinenleitstand (11) temporär freigibt, oder die Zugriffsrechte nach Abgleich mit einer Datenbank ungültig belässt und den Zugriff auf den Druckmaschinenleitstand (11) sperrt.

7. Druckmaschinensteuerungssystem nach einem der Ansprüche 3 bis 6,
**dadurch gekennzeichnet,**
**dass** die Zugriffsrechte der Rechtedateien vom Bediener abhängig sind und bedienerabhängig den Zugriff auf unterschiedliche Funktionen des Druckmaschinenleitstands (11) freigeben oder sperren.
